# EUROPEAN PATENT APPLICATION

(11) **EP 1 217 367 A1**
(43) Date of publication of application: **26.06.2002**
(21) Application number: 01310691.9
(22) Date of filing: 20.12.2001
(51) Int. Cl.: G01N 27/447

(54) **Radial electrophoresis apparatus and method**

(30) Priority: 21.12.2000 AU PR222300
(71) Applicant: GRADIPORE LIMITED, Frenchs Forest, New South Wales 2086 (AU)
(72) Inventor: Roeth, Philip John, New South Wales 2154 (AU); Nair, Chenicheri Hariharan, Connecticut 06870 (US)
(74) Representative: Jump, Timothy John Simon

(57) **Abstract**

An electrophoresis apparatus (10) comprising (a) an inner electrode (11) positioned in an inner electrode zone (12); (b) a substantially non-planar outer electrode (13) positioned in an outer electrode zone (14), the inner electrode (11) disposed relative to the outer electrode (13) so as to be adapted to generate a radial electric field in an electric field area therebetween upon application of an electric potential between the inner and outer electrodes; (c) a first substantially non-planar membrane (15) disposed in the electric field area; (d) a second substantially non-planar membrane (17) disposed between the inner electrode zone (12) and the first membrane (15) so as to define a first interstitial volume (16) therebetween; (e) means adapted to communicate liquid to the inner electrode zone (12) and the outer electrode zone (13); and (f) means adapted to communicate a sample constituent to the first interstitial volume (16); wherein, upon application of the electric potential, one or more components in the sample is caused to move through at least one membrane to an adjacent electrode zone.

## Description

The present invention relates to apparatus and method for electrophoretic separation and treatment of samples.

A variety of electrophoretic techniques have been developed for the processing of charged macromolecules with the most successful being polyacrylamide gel electrophoresis, isoelectric focussing and capillary electrophoresis. Attempts to translate this resolution to a preparative scale have been less successful because the increasing volume of the porous matrix in a larger apparatus makes heat removal more difficult. Nevertheless, partial success has been achieved for some preparative systems including free flow electrophoresis, recycling isoelectric focussing, multi-compartment electrolyser, and conventional gel preparative systems. Although there are a variety of techniques for processing charged molecules, often the presence of salts or other compounds in the preparation can hinder the separation or, alternatively, high concentration of salts may be present in the end product.

Unfortunately, many of the techniques presently available result in loss of some of the macromolecules/compounds, inactivation of the macromolecules/compounds, or dilution of the macromolecule/compound preparation.

The present inventors have now developed a new apparatus which is adaptable for several different separation modes and can be used for large scale separations.

In a first aspect, the present invention provides an electrophoresis apparatus comprising:
(a) an inner electrode positioned in an inner electrode zone;
(b) a substantially non-planar outer electrode positioned in an outer electrode zone, the inner electrode disposed relative to the outer electrode so as to be adapted to generate a radial electric field in an electric field area therebetween upon application of an electric potential between the inner and outer electrodes;
(c) a first substantially non-planar membrane disposed in the electric field area;
(d) a second substantially non-planar membrane disposed between the inner electrode zone and the first membrane so as to define a first interstitial volume therebetween;
(e) means adapted to communicate liquid to the inner electrode zone and the outer electrode zone; and
(f) means adapted to communicate a sample constituent to the first interstitial volume; wherein, upon application of the electric potential, one or more components in the sample is caused to move through at least one membrane to an adjacent electrode zone.

In a second aspect, the present invention provides an electrophoresis apparatus comprising:
(a) an inner electrode positioned in an inner electrode zone;
(b) a substantially non-planar outer electrode positioned in an outer electrode zone, the inner electrode disposed relative to the outer electrode so as to be adapted to generate a radial electric field in an electric field area therebetween upon application of an electric potential between the inner and outer electrodes;
(c) a first substantially non-planar membrane disposed in the electric field area;
(d) a second substantially non-planar membrane disposed between the inner electrode zone and the first membrane so as to define a first interstitial volume therebetween;
(e) a third substantially non-planar membrane disposed between the outer electrode zone and the first membrane so as to define a second interstitial volume therebetween;
(f) means adapted to communicate liquid to the inner electrode zone, the outer electrode zone and first or second interstitial volumes; and
(f) means adapted to communicate a sample constituent to one of the first or second interstitial volumes; wherein, upon application of the electric potential, one or more components in the sample is caused to move through at least one membrane to an adjacent electrode zone or to the other of the first or second interstitial volumes.

The apparatus may be further comprised of:
(g) an elongated housing having first and second opposing ends and an interior portion containing the inner and outer electrodes and the membrane;
(h) a first manifold positioned at the first opposing end of the housing, the first manifold having means adapted to communicate at least one associated fluid with at least one of the electrolyte zones and the interstitial volume; and
(i) a second manifold positioned at the second opposing end of the housing, the second manifold having means adapted to communicate at least one associated fluid with at least one of the electrolyte zones and the interstitial volume.

The housing can be substantially cylindrical so as to accommodate the electrodes and membranes therein. When assembled, the housing and manifolds seal the electrode zones and interstitial volumes. Preferably, the housing is electrically insulated or made of non-conducting material to ensure that the apparatus is safe during use, and that there is no short circuit or inefficient leakage of current by passing the interstitial volume(s)..

The first or second housing or both housings may further contain electrical connectors for connecting power to the respective inner and outer electrodes.

In a further preferred form, there is provided a plurality of non-planar membranes positioned between the inner and outer electrodes forming a plurality of interstitial volumes in the electric field area.

Preferably, at least some of the membranes are electrophoresis separation membranes having defined pore sizes. One or more membranes can be a charged or electro-endo-osmosis membranes which control substantial bulk movement of fluid under the influence of a radial electric field.

The electrophoresis separation membranes are preferably made from polyacrylamide and have a molecular mass cut-off of at least about 1 kDa. The choice of the molecular mass cut-off of a membrane will depend on the sample being processed, the other molecules in the sample mixture, and the type of separation carried out.

The charged or electro-endo-osmotic membrane, if used, is preferably a cellulose tri-acetate membrane (CTM). It will be appreciated that the charged membrane can be formed from any other suitable membrane material such as polyvinyl alcohol (PVAI). The present inventors have found that a CTM having a nominal molecular mass cut-off of 5, 10 or 20 kDa is particularly suitable for use in the apparatus.

In one preferred embodiment, the electrodes are made of titanium mesh coated with platinum. As the outer electrode is generally non-planar and preferably positioned generally coaxial to the inner or central electrode, it will be appreciated that any suitable formable material can be used for the electrode.

One or more of the membranes can also be formed to act as an isoelectric or amphoteric membrane containing a defined charge. This arrangement allows isoelectric separations of components in samples.

The membranes may be formed as a multilayer or sandwich arrangement. The thickness of the membranes can have an effect on the separation or movement of compounds. It has been found that the thinner the membrane, faster and more efficient movement of components in a sample occurs.

The membrane positioned between the inner electrode zone and the first interstitial volume and between the second interstitial volume adjacent the outer electrode zone can have the same molecular mass cut-off or have different cutoffs therefore forming an asymmetrical arrangement.

Preferably, buffer/electrolyte solution is caused to flow through the respective inner and outer electrode zones to form streams. Similarly, sample and/or buffer is caused to flow through the interstitial volumes to form streams therethrough. This allows greater throughput of buffer/sample during electrophoresis which can greatly enhance the rate of transfer of selected components in the sample. The arrangement of the apparatus allows the possibility of scale up for commercial separation applications.

Flow rates of buffer/electrolyte solution/sample in the electrode zones and interstitial volumes can have an influence on the separation of compounds. Rates of milliliters per minute up to liters per minute can be used depending on the configuration of the apparatus and the sample to be separated .

The temperature of buffer/electrolyte in the electrode zones and solutions in the interstitial volumes can be controlled by a suitable cooling/heating means. The apparatus may also be positioned in a controlled-temperature environment to maintain a desired temperature during removal of the salts or the purification of compounds.

The apparatus may have its own power supply or can be connected to an external power supply.

The distance between the electrodes can have an effect on the separation or movement of compounds through the membranes. It has been found that the shorter the distance between the electrodes, the faster the electrophoretic movement of compounds.

Voltage and/or current applied can vary depending on the separation. Typically up to about 500 volts can be used but choice of voltage will depend on the configuration of the apparatus, buffers and the sample to be separated or treated.

The membranes can be formed in any non-planar shape such as dish, u-shaped, cone, oval, circular or cylindrical. In one preferred form, the membranes are generally circular in cross-section positioned around the inner electrode. Thus, the apparatus is in the form of a cylindrical or tube arrangement positioned around the inner or central electrode. In this form, the outer electrode is also generally circular in cross-section such that when a radial electric field is applied between the electrodes, charged molecules can be caused to move through a membrane in 360° direction.

In one preferred form, at least one interstitial volume positioned between the two electrodes can be rotated axially providing a centrifugal force to material in the volume. In this form, it is possible to separate materials by electrophoresis and centrifugation.

In another form, the membranes are tubular in shape and several sets of membranes are positioned adjacent the outer electrode zone. This would be in the form of a hollow fiber configuration where each membrane tube forms an interstitial volume.

An advantage of the apparatus according to the present invention is that the surface area of the membranes is significantly larger than an apparatus with a series of planar membranes where the electromotive force is applied in only one direction.

The apparatus may also further include buffer / electrolyte reservoir(s) for passing buffer or electrolyte to the inner and outer electrode zones, sample and separation reservoirs for passing sample and collecting separated components to and from the respective interstitial volumes.

In a third aspect, the present invention provides a method for concentrating or de-salting a sample by electrophoresis, the method comprising
(a) placing a sample containing a compound to be separated in an interstitial volume of an electrophoresis apparatus comprising an inner electrode positioned in an inner electrode zone; a substantially non-planar outer electrode positioned in an outer electrode zone, the inner electrode disposed relative to the outer electrode so as to be adapted to generate a radial electric field in an electric field area therebetween upon application of an electric potential between the inner and outer electrodes; a first substantially non-planar membrane disposed in the electric field area; a second substantially non-planar membrane disposed between the inner electrode zone and the first membrane so as to define a first interstitial volume therebetween; means adapted to communicate liquid to the inner electrode zone and the outer electrode zone; and means adapted to communicate a sample constituent to the first interstitial volume;
(b) adding buffer or electrolyte to the inner and outer electrode zones;
(c) adding sample to the first interstitial volume; and
(d) applying an electric potential between the electrodes causing at least some fluid or salts in the sample to move through a membrane into an adjacent electrode zone.

The method may further comprise:
(e) collecting the treated sample from the first interstitial volume.

Preferably, the method involves use of the electrophoresis apparatus according to the first aspect of the present invention.

In a fourth aspect, the present invention provides a method for moving a compound from a sample by electrophoresis, the method comprising
(a) placing a sample containing a compound in a first or second interstitial volume of a electrophoresis apparatus comprising an inner electrode positioned in an inner electrode zone; a substantially non-planar outer electrode positioned in an outer electrode zone, the inner electrode disposed relative to the outer electrode so as to be adapted to generate a radial electric field in an electric field area therebetween upon application of an electric potential between the inner and outer electrodes; a first substantially non-planar membrane disposed in the electric field area; a second substantially non-planar membrane disposed between the inner electrode zone and the first membrane so as to define a first interstitial volume therebetween; a third substantially non-planar membrane disposed between the outer electrode zone and the first membrane so as to define a second interstitial volume therebetween; means adapted to communicate liquid to the inner electrode zone, the outer electrode zone and first or second interstitial volumes; and means adapted to communicate a sample constituent to one of the first or second interstitial volumes;
(b) adding buffer or electrolyte to the inner and outer electrode zones;
(c) adding buffer or solvent to the other of the first or second interstitial volume;
(d) applying an electric potential between the electrodes causing at least one component in the sample to move through a membrane into an adjacent interstitial volume or electrode zone.

The method may further comprise:
(e) collecting a component or treated sample from the first or second interstitial volumes.

Preferably, the method involves use of the electrophoresis apparatus according to the second aspect of the present invention.

The sample may be any sample and the component may be a compound capable of being caused to move through a membrane under the influence of an electric potential. The method can also be used to de-salt samples by using an apparatus that only contains one interstitial volume positioned between the inner and outer electrode zones.

It will be appreciated that due to the relative volumes of the first (inner) and second (outer) interstitial volumes, a greater concentration of a product compound will be achieved if the apparatus is configured to allow collection of the product compound from the first (inner) interstitial volume. Sample may be applied to any or all of the interstitial volumes.

In a fifth aspect, the present invention provides use of the apparatus according to the first or second aspects of the present invention in the separation of at least one compound or component from a sample.

In a sixth aspect, the present invention provides a compound separated by the method according to the fourth aspect of the present invention.

Throughout this specification, unless the context requires otherwise, the word "comprise", or variations such as "comprises" or "comprising", will be understood to imply the inclusion of a stated element, integer or step, or group of elements, integers or steps, but not the exclusion of any other element, integer or step, or group of elements, integers or steps.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed in Australia before the priority date of each claim of this application.

In order that the present invention may be more clearly understood, preferred forms will be described with reference to the following drawings and examples.

Figure 1 shows a schematic cross-sectional view of two forms of an apparatus according to the present invention being substantially circular in cross section. Figure 1 A depicts an apparatus having three coaxial membranes positioned between two electrodes. Figure 1B depicts an apparatus having two coaxial membranes positioned between two electrodes.

Figure 2 shows a view of an assembled apparatus as shown in Figure 1A.

Figure 3 shows a view of an arrangement of a manifold for use in the apparatus depicted in Figure 2.

Figure 4 shows a further example of an apparatus according to the present invention having multiple separation tubes or fibres. Figure 4A is an exploded view of the apparatus and Figure 4B is an assembled view of the hollow fiber apparatus.

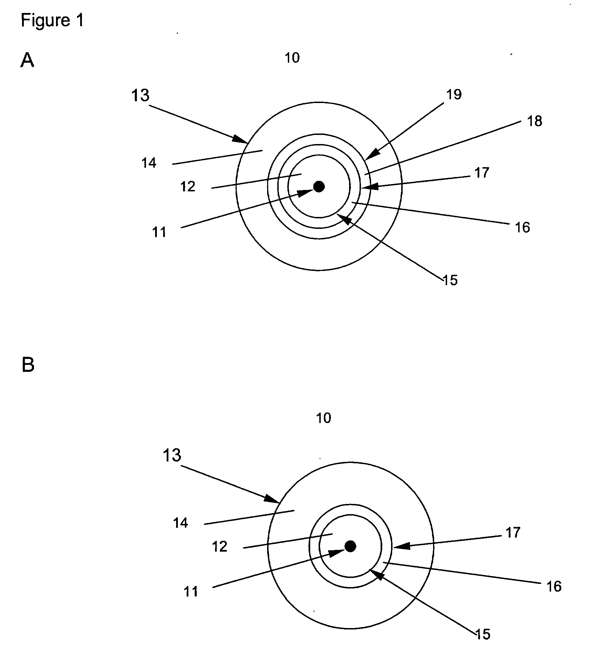

A general example of an apparatus according to the second aspect of the present invention is shown in Figure 1A. The apparatus 10 includes an inner electrode 11 formed of a wire material positioned centrally within the apparatus 10. The inner electrode 11 is surrounded by a first non-planar membrane 15 (inner containment membrane) which forms an inner electrode zone 12 in which the inner electrode 11 is positioned. A second non-planar membrane 17 is positioned around the first membrane 15 forming a first interstitial zone 16. A third membrane 19 is positioned around the second membrane 17 forming a second interstitial volume 18. The third non-planar membrane 19 can be used for containment of separated compounds from the first interstitial volume 16. An outer electrode 13 is positioned outside the third membrane 19 in an outer electrode zone 14. The components of the apparatus are coaxially positioned about the inner electrode 11.

The first, second and third membranes 15, 17, 19 define four areas 12, 14, 16, 18 through which fluid (water, aqueous buffer, organic solvent etc) can be passed, preferably by pumping to control the flow.

The outer electrode zone 14 outside the third membrane 19 contains an appropriate solvent for the extraction procedure, for example an electrophoresis buffer. The concentration, constituents and pH of the solvent can be selected to control the net charge on a molecule of interest.

The second non-planar membrane 17 can have a suitable pore size to allow passage of molecules of interest (sieving membrane) and is positioned around the first membrane 15 forming a first interstitial zone 16 to which a sample is placed.

The first interstitial zone 16 can contain the sample from which individual compounds are to be separated or treated. The second interstitial volume 18 initially is filled with appropriate solvent, and serves as the location to where one or more compounds of interest would be transferred from sample in the first interstitial volume 16. It will be appreciated that a sample can be provided in the second interstitial volume 18 and compound(s) of interest can be moved into the first interstitial volume 16 or adjacent electrode zone.

The inner electrode zone 12 inside the first membrane 15 is filled with a suitable solvent, which may be the same as that in the outer electrode zone 14, or may be different to create solvent gradients across the electrophoretic apparatus 10.

Sample containing the compound or molecule of interest is passed through the first interstitial volume at a set flow rate and an electrical potential applied between the inner and outer electrodes causing the electrophoretic migration of charged molecules to the electrode carrying opposite charge.

Through the correct choice of solvent conditions and molecular weight cut-off/pore size of the membranes 15, 17, 19, a molecule of interest would be transferred from the sample to the second interstitial volume 18 or one of the electrode zones.

The apparatus according to the first aspect of the present invention is shown in Figure 1B. This apparatus can be made with a similar configuration as the apparatus shown in Figure 1A but not having a third membrane. In this form, the apparatus 10 includes an inner electrode 11 formed of a wire material positioned centrally within the apparatus 10. The inner electrode 11 is surrounded by a first membrane 15 which forms an inner electrode zone 12 in which the inner electrode 11 is positioned. A second non-planar membrane 17 of a suitable pore size to allow passage of molecules of interest is positioned around the first membrane 15 forming a first interstitial zone 16. An outer electrode 13 is positioned outside the second membrane 17 in an outer electrode zone 14. The components of the apparatus are coaxially positioned about the inner electrode 11.

The first and second membranes 15, 17 define three areas 12, 14, 16 through which fluid (water, aqueous buffer, organic solvent etc) can be passed, preferably by pumping to control the flow.

The apparatus can be used for charged-based separations, size-based separations, isoelectric separations, de-salting or concentration depending on the types of membranes used. One or more membranes can be electrophoresis membranes having defined pore sizes, charged membranes or electro-endo-osmosis membranes.

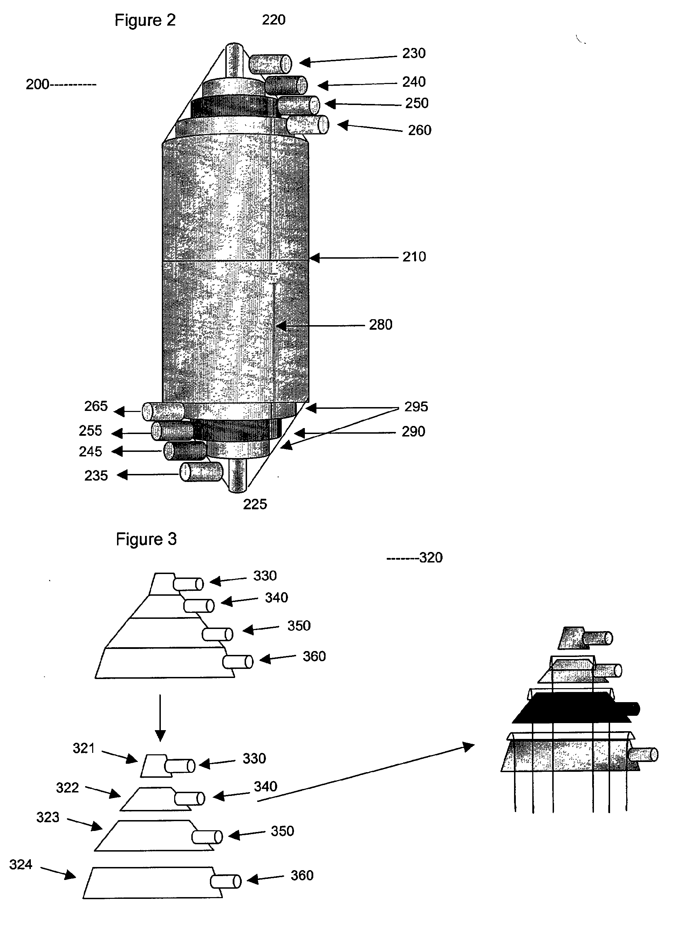

An arrangement of a radial electrophoresis apparatus comprising three membranes is shown in Figure 2. The apparatus 200 comprises a cylindrical housing 210 having a first manifold 220 positioned at the top of the housing 210. The first manifold 220 includes inlet means 230 for providing buffer or electrolyte to the inner electrode zone. Inlet 240 provides sample or buffer to the first interstitial volume and inlet 250 is connected to the second interstitial volume for providing sample or buffer thereto. Inlet 260 provides buffer or electrolyte to the outer electrode zone where the outer electrode is housed. Similarly, the apparatus 200 contains a second manifold 225 positioned at the other end of the housing 210. The second manifold 225 contains outlet 235 for passing buffer or electrolyte out of the inner electrode zone. Outlets 245 and 255 are provided for the first and second interstitial volumes, respectively. Outlet 265 allows the movement of buffer or electrolyte out of the outer electrode zone. In order to provide electrical connection to the apparatus 200, the first manifold contains electrical connector 270 which is connected to the inner electrode. Electrical connector 280 is used to provide electrical connection to the outer electrode which is incorporated within the outer housing 210. The first (sieving) membrane 290 is located between the inner and outer electrodes, while containment membranes 295 are placed between the first membrane and the inner and outer electrodes respectively, defining the inner and outer interstitial volumes.

Figure 3 shows a schematic representation of a first manifold 320 for use in the apparatus shown in Figure 2. The first manifold 320 is in modular form comprising four components 321, 322, 343, 324 which assist in the formation of the inner electrode zone, the first interstitial volume, the second interstitial volume and the outer electrode zone, respectively. Each modular component 321, 322, 323, 324 contains a respective inlet means 330, 340, 350, 360 for providing buffer, electrolyte or sample to the respective electrode zones or interstitial volumes. The modular upper manifold 320 also provides locating means for the first, second and third membranes. The membranes are positioned within the components 321, 322, 323, 324 of the first manifold 320 so as to locate the membranes to provide the required zones or volumes therebetween.

A similar second manifold is provided for the other end of the housing and has corresponding components. One or both manifolds also provide an electrical connection to the inner electrode.

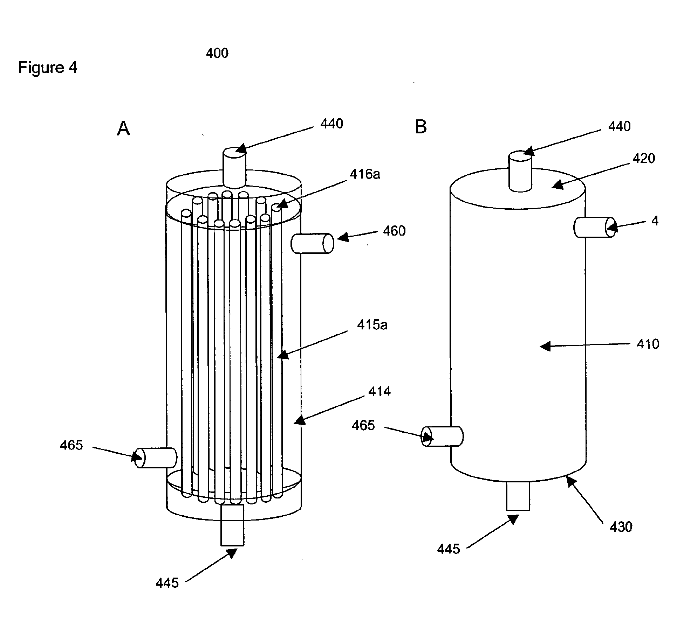

Figure 4 shows an alternate configuration of electrophoresis apparatus according to the present invention in the form of a hollow fiber configuration. Figure 4A shows the components of the apparatus 400 having a plurality of membranes forming hollow fibres 415a which encompass a luminal space 416a forming the first interstitial volume. Each hollow fibre membrane 415a is positioned around a central electrode such that there is a multiplicity of inner electrodes. Each hollow fibre membrane 415a is positioned in a second interstitial volume 418. Sample is provided into and out of the first interstitial volumes by inlet means 440 and outlet means 445. Buffer or electrolyte is provided to the outer electrode zone 414 via inlet means 460 and outlet means 465.

In another form, the invention involves a hollow fibre approach to electrophoresis, where one electrode in the shape of a thin wire is located at the centre of a series of membranes, preferably concentric membranes, and a second electrode in the shape of a hollow cylinder is located outside the membranes.

Some variations on the apparatus include:
i) different electrode shapes, for example a cylindrical electrode, a flat strip electrode, an elliptical electrode, cross shaped or other shapes which allow beneficial manipulation of the electrical field.
ii) the third membrane can be excluded to create a system with two membranes for de-salting or dialysis applications where removal of contaminants is required.
iii) multiple concentric membranes could be employed to effect simultaneous size based separations, for example concentric membranes with 50, 100, 200 etc molecular weight cut-off values could be employed.
iv) multiple separation tubes with separation channels each with membrane arrangements in a single separation unit define the arrangement of inner electrode, concentric membranes and outer electrode as a single tube or fibre. Many of these fibres could be packed or bundled together in a single separation unit, with their outer electrode zones shared. The number of tubes in a bundle would be determined by the scale of separation or purification required. This type of arrangement of tubes or fibres in a bundle is seen in tissue culture bioreactors and artificial kidney devices.
v) either an entire separation tube or fibre, or a single membrane within a tube or fibre could be spun around an axis defined by the inner electrode at an appropriate speed to create a centrifugal force effect on the samples within the fibre. This centrifugal effect could be used to facilitate separations by including centrifugal force with electrophoretic effects, and could also be used for membrane de-fouling by spinning contaminants away from the outer faces of the containment or sieving membranes.
vi) the inner electrode can be rotated at the centre of the apparatus to create periodic variations in the electric field intensity to facilitate separations which may benefit from such variations.

The uses suggested for this type of electrophoretic separation device include:
macromolecular separation or purification, micromolecular separation or purification, concentration by transfer from large sample volumes to smaller product volumes, de-salting by using a solvent with low ionic strength compared to the sample, concentration using a membrane composition that induces endo-osmotic flow from the sample to the solvent stream, hemodialysis for treatment of blood for the removal of disease related molecules, online extraction of biological products expressed in tissue culture/bioreactor systems, culture of cells within the hollow fibre system, with the option of periodic product extraction and culture medium renewal/refreshment, use of immobilised affinity ligands attached the membranes for procedures requiring a combination of affinity and electrophoretic separations, and use of either free of immobilised enzymes or other catalysts in the sample stream to allow extraction of the reaction product as it is produced catalytically.

### RESULTS

Experiments were initiated to investigate electrophoresis separation using non-planar, particularly tubular membranes. A simple model system was prepared which demonstrated the function of the concentric membrane system.

Tubular membranes were prepared for the model system. Initially attempts were made to manufacture the membranes using an adaptation of a conventional membrane production scheme. Using an existing chemical system, acrylamide was cast onto tubular PET support using a variety of methods such as immersion, dip & roll, capillary action.

A different method was then investigated utilising existing production of acrylamide electrophoresis membranes. Strips of polyacrylamide membranes were formed into tubes and sealed using a 1.5% agarose solution. The resulting membrane possessed sufficient mechanical strength to function in the model system as well as being able to hold liquid. Once the membranes had been manufactured they were used to construct the model system.

The experiment was designed around the primary concept of a device having concentric membranes as shown in Figure 1A. The concept was very similar to conventional flat membrane-based electrophoresis technology with a three membrane 'stack' utilised. The major differences were the circular membranes, radial electric field produced between the electrodes and the static nature of the chambers formed by the membranes. The chambers were made static for reasons of experimental logistics rather than specific design.

The experiment carried out on the system was hemaglobin/coomassie-stained bovine serum albumin (BSA) separation routinely carried out in demonstrations of other electrophoresis technology. This separation was chosen as it provided visual feedback during the course of an electrophoretic run in the form of a colour change in the zones or volumes between the membranes.

The results of the experiment were positive in that even from visual inspection the expected result partially occurred in that separation of the red and blue proteins occurred. SDS PAGE analysis of the experiments also indicated some selective transfer of the proteins had occurred.

Overall, the experiment provided a clear indication that the concentric membrane system works.

Conventional membrane electrophoresis technology is based on a flat-bed membrane configuration. The advantages of the present invention are the increase in available surface area, ability to use a plurality of streams or volumes between the membranes, and the mechanical strength associated with the cylindrical configuration.

## Claims

1. An electrophoresis apparatus (10) comprising:
(a) an inner electrode (11) positioned in an inner electrode zone (12);
(b) a substantially non-planar outer electrode (13) positioned in an outer electrode zone (14), the inner electrode (11) disposed relative to the outer electrode (13) so as to be adapted to generate a radial electric field in an electric field area therebetween upon application of an electric potential between the inner (11) and outer (13) electrodes;
(c) a first substantially non-planar membrane (15) disposed in the electric field area;
(d) a second substantially non-planar membrane (17) disposed between the inner electrode zone (12) and the first membrane (15) so as to define a first interstitial volume (16) therebetween;
(e) means adapted to communicate liquid to the inner electrode zone (12) and the outer electrode zone (14); and
(f) means adapted to communicate a sample constituent to the first interstitial volume (16); wherein, upon application of the electric potential, one or more components in the sample is caused to move through at least one membrane to an adjacent electrode zone.

2. An electrophoresis apparatus (10) comprising:
(a) an inner electrode (11) positioned in an inner electrode zone (12);
(b) a substantially non-planar outer electrode (13) positioned in an outer electrode zone (14), the inner electrode (11) disposed relative to the outer electrode (13) so as to be adapted to generate a radial electric field in an electric field area therebetween upon application of an electric potential between the inner (11) and outer (13) electrodes;
(c) a first substantially non-planar membrane (15) disposed in the electric field area;
(d) a second substantially non-planar membrane (17) disposed between the inner electrode zone (12) and the first membrane (15) so as to define a first interstitial volume (16) therebetween;
(e) a third substantially non-planar membrane (19) disposed between the outer electrode zone (14) and the first membrane (15) so as to define a second interstitial volume (18) therebetween;
(f) means adapted to communicate liquid to the inner electrode zone (12), the outer electrode zone (14) and first (16) or second (18) interstitial volumes; and
(f) means adapted to communicate a sample constituent to one of the first (16) or second (18) interstitial volumes; wherein, upon application of the electric potential, one or more components in the sample is caused to move through at least one membrane to an adjacent electrode zone or to the other of the first (16) or second (18) interstitial volumes.

3. The apparatus according to claim 1 or 2 further comprising:
(g) an elongated housing (210) having first and second opposing ends and an interior portion containing the inner (11) and outer (13) electrodes and the membrane;
(h) a first manifold (220) positioned at the first opposing end of the housing, the first manifold (220) having means adapted to communicate at least one associated fluid with at least one of the electrolyte zones and the interstitial volume; and
(i) a second manifold (225) positioned at the second opposing end of the housing, the second manifold having means adapted to communicate at least one associated fluid with at least one of the electrolyte zones and the interstitial volume.

4. The apparatus according to any one of claims 1 to 3 wherein the membranes are selected from the group consisting of electrophoresis membranes having defined pore sizes, charged membranes, electro-endo-osmosis membranes, and combinations thereof.

5. The apparatus according to claim 4 wherein the electrophoresis separation membranes are made from polyacrylamide and have a molecular mass cut-off of at least about 1 kDa, the charged membranes are iso-electric membranes or amphoteric membranes, and the electro-endo-osmosis membranes are formed of cellulose tri-acetate membrane or polyvinyl alcohol.

6. The apparatus according to any one of claims 1 to 5 comprising a plurality of membranes forming a plurality of interstitial volumes.

7. The apparatus according to any one of claims 1 to 6 wherein the membranes can be formed in a non-planar shape selected from the group consisting of dish, u-shaped, cone, oval, circular, and cylindrical.

8. The apparatus according to any one of claims 1 to 6 wherein the membranes are tubular in shape and positioned about the inner electrode zone (12) providing a hollow fiber configuration where each membrane tube forms an interstitial volume.

9. A method for concentrating or de-salting a sample by electrophoresis, the method comprising:
(a) placing a sample containing a compound to be separated in an interstitial volume of an electrophoresis apparatus (10) comprising an inner electrode (11) positioned in an inner electrode zone (12); a substantially non-planar outer electrode (13) positioned in an outer electrode zone (14), the inner electrode (11) disposed relative to the outer electrode (13) so as to be adapted to generate a radial electric field in an electric field area therebetween upon application of an electric potential between the inner (11) and outer (13)electrodes; a first substantially non-planar membrane (15) disposed in the electric field area; a second substantially non-planar membrane (17) disposed between the inner electrode zone (12) and the first membrane (15) so as to define a first interstitial volume (16) therebetween; means adapted to communicate liquid to the inner electrode zone (12) and the outer electrode zone (14); and means adapted to communicate a sample constituent to the first interstitial volume(16);
(b) adding buffer or electrolyte to the inner (12) and outer (14) electrode zones;
(c) adding sample to the first interstitial volume (16);
(d) applying an electric potential between the electrodes causing at least some fluid or salts in the sample to move through a membrane into an adjacent electrode zone; and
(e) optionally collecting the treated sample from the first interstitial volume (16).

10. A method for moving a compound from a sample by electrophoresis, the method comprising:
(a) placing a sample containing a compound in a first (16) or second (18) interstitial volume of a electrophoresis apparatus (10) comprising an inner electrode (11) positioned in an inner electrode zone (12); a substantially non-planar outer electrode (13) positioned in an outer electrode zone (14), the inner electrode (11) disposed relative to the outer electrode (13) so as to be adapted to generate a radial electric field in an electric field area therebetween upon application of an electric potential between the inner (11) and outer (13) electrodes; a first substantially non-planar membrane (15) disposed in the electric field area; a second substantially non-planar membrane (17) disposed between the inner electrode zone (12) and the first membrane (15) so as to define a first interstitial volume (16) therebetween; a third substantially non-planar membrane (19) disposed between the outer electrode zone (14) and the first membrane (15) so as to define a second interstitial volume (18) therebetween; means adapted to communicate liquid to the inner electrode zone (12), the outer electrode zone (14) and first (16) or second (18) interstitial volumes; and means adapted to communicate a sample constituent to one of the first (16) or second (18) interstitial volumes; (b)adding buffer or electrolyte to the inner (12) and outer (14) electrode zones;
(c) adding buffer or solvent to the other of the first (16) or second (18) interstitial volume;
(d) applying an electric potential between the electrodes causing at least one component in the sample to move through a membrane into an adjacent interstitial volume or electrode zone; and
(e) optionally collecting a component or treated sample from the first (16) or second (18) interstitial volumes.
